# EUROPÄISCHE PATENTANMELDUNG

(11) **EP 1 355 134 A1**
(43) Veröffentlichungstag der Anmeldung: **22.10.2003**
(21) Anmeldenummer: 03006043.8
(22) Anmeldetag: 19.03.2003
(51) Int. Cl.: G01F 23/38

(54) **Flüssigkeitsfüllstandsmesser**

(30) Priorität: 11.04.2002 DE 10215898
(71) Anmelder: Pierburg GmbH, 41460 Neuss (DE)
(72) Erfinder: Weisse, Michael, 40227 Düsseldorf (DE)
(74) Vertreter: von Kirschbaum, Alexander, Dipl.-Ing.

(57) **Zusammenfassung**

Ein Füllstandsmesser für Kraftfahrzeug-Kraftstofftanks weist ein Schwimmerelement (26) auf. Mit dem Schwimmerelement (26) ist ein Hebel (18) verbunden, der um eine Schwenkachse (28) schwenkbar ist. Ferner weist der Füllstandsmesser einen Positionsaufnehmer (10) sowie einen mit dem Hebel (18) verbunden Positionsgeber (16) auf. Der Positionsgeber (16) ist auf Höhe des Positionsaufnehmers (10) mit dem Hebel (18) verbunden. Der Positionsgeber (16) wirkt erfindungsgemäß mit dem Positionsaufnehmer (10) berührungslos zusammen.

## Beschreibung

Die Erfindung betrifft einen Füllstandsmesser für Kraftfahrzeug-Kraftstofftanks.

Als Füllstandsmesser für Kraftstofftanks sind Schwimmerelemente bekannt, wobei die Höhenlage des Schwimmerelements über einen Potentiometer übermittelt wird. Hierzu ist das Schwimmerelement mit einem Kontaktstift verbunden, der als Schleifer an Leiterbahnen eines Potentiometers anliegt. Ein Bewegen des Kontaktstiftes bzw. Schleifers relativ zu den als Positionsaufnehmer dienenden Leiterbahnen führt zu einer Widerstandsänderung. In Abhängigkeit der Widerstandsänderung kann der Füllstand mit Hilfe einer entsprechenden Auswerteeinrichtung bestimmt werden. Insbesondere bei modernen Kraftstoffen und Kraftstoffgemischen besteht bei derartigen Füllstandsmessern der Nachteil, dass die Schleifkontakte verkleben können und/oder die Leiterbahnen mit einem festen Überzug versehen werden. Hierdurch können erhebliche Messfehler hervorgerufen werden. Ferner hat das Verwenden eines Schleifkontaktes den Nachteil, dass der Schleifkontakt sowie die Leiterbahnen Verschleiß unterworfen sind.

Des Weiteren sind als Füllstandsmesser kapazitative Füllstandsmesser bekannt, die auf einem grundlegend anderen Prinzip beruhen. Derartige Füllstandsmesser weisen kein Schwimmerelement auf. Vielmehr wird eine Leiterplatte in den Kraftstofftank eingesetzt und die Füllhöhe dadurch ermittelt, dass sich die Dielektrizitätskonstante des zwischen den beiden Platten des Kondensators befindlichen Mediums ändert. Da die Kapazitätsänderung der Kondensatoren von der Füllhöhe abhängig ist, lässt sich die Füllhöhe aus der Kapazitätsänderung ermitteln. Derartige Füllstandsmesser sind jedoch äußerst aufwendig und teuer.

Aufgabe der Erfindung ist es, einen einfach aufgebauten verschleißfreien Füllstandsmesser zu schaffen. Die Lösung der Aufgabe erfolgt erfindungsgemäß durch die Merkmale des Anspruchs 1.

Der erfindungsgemäße Füllstandsmesser weist ein Schwimmerelement und ein mit dem Schwimmerelement verbundenen Positionsgeber auf. Ferner weist der Füllstandsmesser ein mit dem Positionsgeber zusammenwirkenden Positionsaufnehmer auf. Hierbei ist der Positionsaufnehmer ortsfest. Ebenso kann der Positionsgeber ortsfest angeordnet und der Positionsaufnehmer mit dem Schwimmerelement verbunden sein. Erfindungsgemäß wirken der Positionsgeber und der Positionsaufnehmer berührungslos zusammen. Auf Grund der berührungslosen Positionsaufnahme tritt kein Verschleiß auf. Ferner kann ein Verkleben von Schleifkontakten nicht auftreten, da ein von dem Kraftstoff hervorgerufener Überzug oder Belag bei berührungsloser Positionsaufnahme nicht störend ist.

Vorzugsweise ist das Schwimmerelement mit einem schwenkbaren Hebel verbunden. Bei der Änderung des Füllstandes in einem Kraftstofftank wird das Schwimmelement angehoben oder gesenkt und hierbei um eine Schwenkachse des Hebels gedreht.

Als Positionsgeber und Positionsaufnehmer kann ein Drehmelder oder Resolver vorgesehen sein. Der Aufbau eines Drehmelders ähnelt demjenigen eines Synchronmotors. Bei einem Drehmelder wird eine Ständerwicklung mit zwei Wechselspannungen gespeist. An der Rotorwicklung wird durch die beiden an den Statorwicklungen anliegenden Spannungen eine Spannung induziert. Je nach Stellung des Rotors sind die beiden induzierten Spannungen zueinander verschoben. Aus dieser Phasenverschiebung kann ein Drehwinkel ermittelt werden. Bei dem Verwenden eines Drehmelders als Positionsgeber und Positionsaufnehmer dienen in vorstehend beschriebenem Beispiel die Statorwicklungen als Positionsgeber und die Rotorwicklung als Positionsaufnehmer. Erfindungsgemäß ist die drehbare Rotorwelle mit der Schwenkachse des Hebels verbunden, so dass ein Schwenken des Hebels ein Drehen der Rotorachse bewirkt.

Ebenso kann bei einem Drehmelder auch auf die Wicklungen eines Rotors mit zwei Polen eine Wechselspannung geschaltet werden. Der Stator weist zwei um mindestens 90° versetzte Spulen auf. In diese wird in Abhängigkeit der Lage des Rotors eine Spannung induziert. Aus dem Vergleich der beiden Spannungen kann wiederum ein Drehwinkel abgeleitet werden. In diesem Ausführungsbeispiel ist somit die Wicklung des Rotors der Positionsgeber und die Spulen des Stators der Positionsaufnehmer.

Beim Verwenden eines Drehmelders als Positionsgeber und Positionsaufnehmer, der mit der Schwenkachse des Hebels verbunden ist, kann der Füllstand aus dem Schwenkwinkel und der Hebelgeometrie auf einfache Weise ermittelt werden.

Bei einer besonders bevorzugten Ausführungsform der Erfindung ist der Positionsgeber im Abstand zur Schwenkachse des Hebels mit diesem verbunden. Der Positionsgeber wirkt erfindungsgemäß wiederum berührungslos mit einem Positionsaufnehmer zusammen. Vorzugsweise handelt es sich um eine berührungslose elektromagnetische Positionserfassung. Hierbei wird vom Positionsgeber ein elektromagnetisches Feld erzeugt, das von dem Positionsaufnehmer detektiert wird. Bei dieser bevorzugten Ausführungsform bewegt sich der Positionsgeber auf einer Kreisbahn. Auf Grund des Abstands zur Schwenkachse des Hebels ist bei dieser Ausführungsform eine sehr genaue Positionserfassung möglich.

Selbstverständlich kann die Lage des Positionsgebers und des Positionsaufnehmers auch in dieser Ausführungsform vertauscht werden.

Besonders bevorzugt ist es, als Positionsaufnehmer, der vorzugsweise ortsfest ist, eine mäanderförmige Leiterbahn vorzusehen. Die Leiterbahn erstreckt sich hierbei über den gesamten Messweg. Bei einem Füllstandsmesser, der einen Hebel aufweist, an dem der Positionsgeber angeordnet ist, handelt es sich bei der Leiterbahn um eine teilkreisförmig ausgebildete Leiterbahn. Als Positionsgeber wirkt mit der mäanderförmigen Leiterbahn vorzugsweise eine erste Leiterbahn zusammen, die mindestens eine Mäanderschleife umfasst. Da an der ersten Leiterbahn des Positionsgebers Spannung anliegt, wird bei der Bewegung des Positionsgebers eine Spannung in die mäanderförmige Leiterbahn induziert. Vorzugsweise ist der Positionsaufnehmer und der Positionsgeber entsprechend eines Messschlittens aufgebaut, wobei der Positionsgeber vorzugsweise zwei Leiterbahnen aufweist, an denen jeweils eine Spannung anliegt. Durch eine geeignete Wahl der Breite der Mäanderschleifen der ersten und zweiten Leiterbahn des Positionsgebers, die vorzugsweise der Breite der Mäanderschleifen der Leiterbahn des Positionsaufnehmers entspricht, und einem Versetzen der relativen Position zwischen den beiden Leiterbahnen des Positionsgebers und den Mäanderschleifen des Positionsaufnehmers, kann eine sehr genaue Positionserfassung durchgeführt werden. Hierbei ist der Positionsaufnehmer vorzugsweise mit einer Auswerteeinrichtung verbunden, die u.a. die Zyklen bzw. Null-Durchgänge der von dem Positionsaufnehmer gemessenen Spannungen mitzählt. Hieraus kann die Winkellage des Hebels des Füllstandsmessers und somit der Füllstand ermittelt werden.

In sämtlichen vorstehenden Ausführungsbeispielen kann die Lage des Positionsgebers und des Positionsaufnehmers vertauscht sein.

Insbesondere das gemäß der Erfindung besonders bevorzugte Vorsehen von gegeneinander verschiebbaren mäanderförmigen Leiterbahnen kann sowohl bei einem mit einem Hebel verbundenen Schwimmerelement als auch bei einem Schwimmerelement vorgesehen sein, das sich auf einer Geraden bewegt.

Die besonderen Vorteile des erfindungsgemäß berührungslosen Zusammenwirkens des Positionsgebers mit dem Positionsaufnehmer liegen darin, dass keine Kontaktierungs- und Reibungsprobleme auftreten und somit auch kein Abrieb, wie beispielsweise bei Schleifkontakten, auftritt. Ferner ist der erfindungsgemäße Füllstandsmesser einfach auszuwerten und unempfindlich gegen elektrostatische Entladungen. Insbesondere ist es möglich, die Leiterbahnen beispielsweise durch Tauchlackierung abzudichten. Des Weiteren ist der erfindungsgemäße Füllstandsmesser äußerst unempfindlich gegenüber Temperaturschwankungen.

Als Positionsgeber und Positionsaufnehmer kann ferner auch ein optisches System vorgesehen sein. Beispielsweise kann als Positionsgeber ein strahlungsimitierender Sender, beispielsweise eine Lichtquelle, vorgesehen sein, deren Position von einem Positionsaufnehmer, wie einer Photoelektrode, bestimmt wird.

Als Positionsgeber und Positionsaufnehmer kann ferner auch ein magnetempfindliches Sensor-/Magnetsystem vorgesehen sein. Insbesondere sind magnetempfindliche Sensoren magnetresistive Sensoren, Hall-Sensoren und Wiegand-Effekt-Sensoren geeignet.

Eine weitere Möglichkeit zur Erfassung des Drehwinkels einer Schwenkachse, die insbesondere mit dem Schwimmerelement verbunden ist, besteht darin, die Winkelposition durch zwei um 90° zueinander versetzte Sensoren oder auch durch drei um 120° zueinander versetzte Sensoren zu erfassen. Ferner kann die Winkelposition dadurch erfasst werden, dass beispielsweise die Schwenkachse selbst als Magnetstab ausgebildet ist, der um seinen Mittelpunkt gedreht wird, wobei dies auch exzentrisch möglich ist. Die Winkelposition kann auch durch eine seitliche Annäherung mit konstantem oder variablem Luftspalt zwischen dem Sensor und einem rotierenden Positionsgeber erfolgen.

Anstelle des Erfassens einer Winkelposition ist auch das Erfassen einer Linearposition, d.h. einer linearen Verschiebung zwischen den Positionsgeber und dem Positionsaufnehmer, möglich. Dies ist insbesondere auch durch eine seitliche Annäherung mit konstantem Luftspalt zwischen dem Sensor und dem linear beweglichen Positionsgeber möglich.

Nachfolgend wird die Erfindung anhand einer bevorzugten Ausführungsform unter Bezugnahme auf die anliegenden Zeichnungen näher erläutert. Es zeigen:
- Fig. 1: eine Prinzipskizze zur Erläuterung des bevorzugten Messsystems und
- Fig. 2: eine schematische Seitenansicht einer bevorzugten Ausführungsform des Füllstandsmessers.

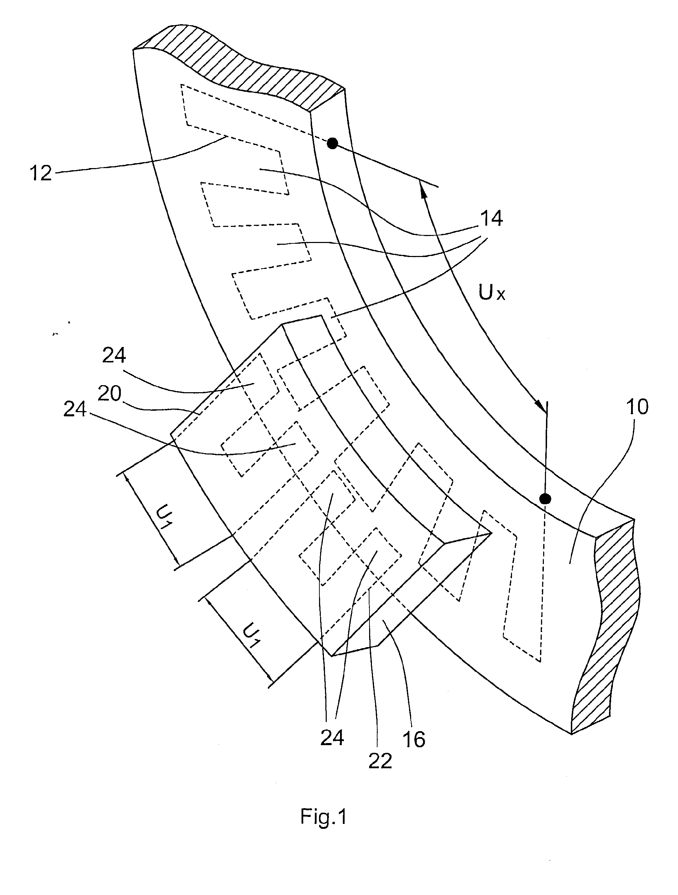

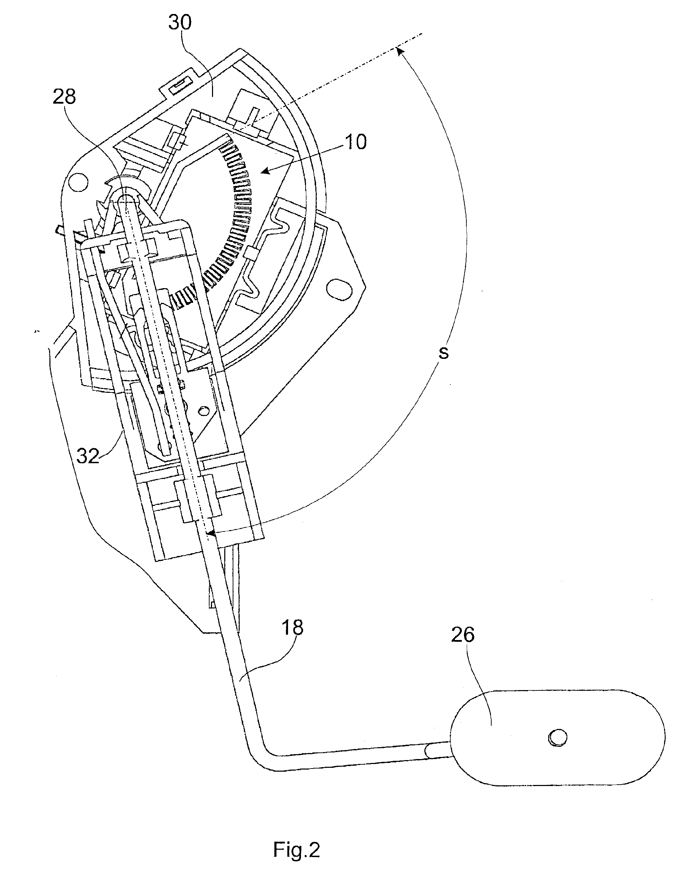

Fig. 1 entspricht einem Ausschnitt des Messsystems des in Fig. 2 dargestellten Füllstandsmessers. Hierbei ist ein ortsfester Positionsaufnehmer 10 vorgesehen, der eine mäanderförmige Leiterbahn 12 aufweist. Die Leiterbahn 12 erstreckt sich über den gesamten Messweg s (Fig. 2) des Füllstandsmessers. Die mäanderförmige Leiterbahn 12 weist eine Vielzahl hintereinander angeordneter, im Wesentlichen rechteckförmiger, Mäanderschleifen 14 auf. Die Mäanderschleifen 14 haben eine konstante Breite und weisen jeweils dieselbe Höhe auf.

Dem Positionsaufnehmer 10 gegenüberliegend ist ein Positionsgeber 16 angeordnet. Der Positionsgeber 16 ist in einem Abstand zum Positionsaufnehmer 10 angeordnet, so dass eine berührungslose Positionsaufnahme stattfindet. Der Positionsgeber 16 ist auf Höhe des Positionsaufnehmers 10 beispielsweise an einem Hebel 18 des in Fig. 2 dargestellten Füllstandsmessers auf Höhe des Positionsaufnehmers 10 angeordnet. Der Positionsgeber 16 weist eine erste Leiterbahn 20, sowie eine zweite Leiterbahn 22 auf. Die beiden Leiterbahnen 20,22 sind identisch ausgebildet, wobei jede Leiterbahn 20,22 zwei Mäanderschleifen 24 aufweist. Die Breite sowie die Höhe der Mäanderschleifen 24 entspricht vorzugsweise der Breite und der Höhe der Mäanderschleifen 14. Die beiden Leiterbahnen 20,22 des Positionsgebers 16 sind zur Erzielung guter Messwerte vorzugsweise um ein Viertel der Mäanderteilung, d.h. um die halbe Breite einer Mäanderschleife, gegeneinander versetzt.

An den beiden Leiterbahnen 20,22 des Positionsgebers 16 liegt jeweils eine Spannung U₁ bzw. U₂ an. Durch Verschieben des Positionsgebers 16 gegenüber dem Positionsaufnehmer 10 wird in der mäanderförmigen Leiterbahn 12 des Positionsaufnehmers eine Spannung Uₓ induziert. Auf Grund des Versatzes der beiden Leiterbahnen 20,22 des Positionsgebers werden zwei zueinander versetzte Spannungen induziert. Zur Bestimmung des Messweges werden die Zyklen aufeinanderfolgender Wechsel gezählt. Zur genauen Bestimmung des Weges wird innerhalb eines Zyklus die Phasenlage der Spannungen Uₓ gegenüber U₁ ermittelt.

Der Positionsaufnehmer 10 ist zum Erfassen der Spannung Uₓ mit einer Auswerteeinrichtung verbunden, durch die u.a. das Mitzählen erfolgt. Ferner kann beim Vorsehen des in Fig. 1 dargestellten Messprinzips bei einem in Fig. 2 dargestellten Füllstandsmesser unmittelbar durch die Auswerteeinrichtung eine Umrechnung des zurückgelegten Weges über die Winkellage des Hebels 18 und in Abhängigkeit der Geometrie des Hebels 18 in den Füllstand des Kraftstofftanks erfolgen.

Die bevorzugte Ausführungsform des Füllstandsmessers weist ein Schwimmelement 26 (Fig. 2) auf, das mit dem Hebel 18 verbunden ist. Der Hebel 18 ist um eine Schwenkachse 28 schwenkbar gelagert. Mit dem Hebel 18 ist auf Höhe des Positionsaufnehmers 10 der Positionsgeber 16 verbunden. Bei einer Veränderung des Flüssigkeitsniveaus wird das schwimmfähige Schwimmelement angehoben oder gesenkt und somit der Hebel 18 um die Schwenkachse 28 gedreht. Hierbei erfolgt eine Bewegung des mit dem Hebel 18 verbundenen Positionsgebers 16 bzgl. des ortsfesten Positionsaufnehmers 10. Hierzu ist der Positionsaufnehmer 10 an einer Halterung 30 vorgesehen. Des Weiteren ist mit dem Hebel 18 ein Rückstellelement 32, wie eine Feder, vorgesehen, durch das sichergestellt ist, dass sich das Schwimmerelement 26 stets auf der Oberfläche des Kraftstoffes befindet.

## Patentansprüche

1. Füllstandsmesser für Kraftfahrzeug-Kraftstofftanks, mit
einem Schwimmerelement (26),
einem mit dem Schwimmerelement (26) verbundenen Positionsgeber (16) und
einem mit dem Positionsgeber (16) zusammenwirkenden Positionsaufnehmer (10),
**dadurch gekennzeichnet,**
**dass** der Positionsgeber (16) und der Positionsaufnehmer (10) berührungslos zusammenwirken.

2. Füllstandsmesser nach Anspruch 1, **dadurch gekennzeichnet, dass** das Schwimmerelement (26) mit einem schwenkbaren Hebel (18) verbunden ist.

3. Füllstandsmesser nach Anspruch 2, **dadurch gekennzeichnet, dass** der Positionsgeber (16) im Abstand zur Schwenkachse (28) des Hebels (18) mit diesem verbunden ist.

4. Füllstandsmesser nach einem der Ansprüche 1-3, **dadurch gekennzeichnet, dass** der Positionsaufnehmer (10) eine sich über den gesamten Messweg (s) erstreckende mäanderförmige Leiterbahn (12) aufweist.

5. Füllstandsmesser nach einem der Ansprüche 1-4, **dadurch gekennzeichnet, dass** der Positionsgeber (16) eine erste Leiterbahn (20) aufweist, die mindestens eine Mäanderschleife (24) umfasst.

6. Füllstandsmesser nach Anspruch 5, **dadurch gekennzeichnet, dass** der Positionsgeber (16) zwei Leiterbahnen (20,22) aufweist, die jeweils eine, vorzugsweise zwei, Mäanderschleifen (24) umfasst.

7. Füllstandsmesser nach Anspruch 6, **dadurch gekennzeichnet, dass** die Leiterbahnen (20,22) um ein Viertel der Mäanderteilung zueinander versetzt angeordnet sind.

8. Füllstandsmesser nach einem der Ansprüche 1-7, **dadurch gekennzeichnet, dass** der Positionsaufnehmer (10) mit einer Auswerteeinrichtung verbunden ist.

9. Füllstandsmesser nach einem der Ansprüche 1-8, **dadurch gekennzeichnet, dass** es sich bei dem Positionsgeber und dem Positionsaufnehmer um ein magnetfeldempfindliches Sensor-/Magnetsystem handelt.
